# EUROPÄISCHE PATENTSCHRIFT

(11) **EP 2 901 175 B1**
(45) Veröffentlichungstag und Bekanntmachung des Hinweises auf die Patenterteilung: **24.01.2018**
(21) Anmeldenummer: 12812897.2
(22) Anmeldetag: 10.12.2012
(51) Int. Cl.: G01S 15/93, G01S 7/02

(54) **SENSORVORRICHTUNG, BETRIEBSVERFAHREN FÜR EINE SENSORVORRICHTUNG SOWIE EINE VERWENDUNG EINER SENSORVORRICHTUNG**
SENSOR DEVICE, OPERATION METHOD FOR A SENSOR DEVICE AND USE OF A SENSOR DEVICE
DISPOSITIF ELECTRONIQUE, PROCEDE DE FONCTIONNEMENT POUR UN DISPOSITIF ELECTRONIQUE ET UTILISATION D'UN DISPOSITIF ELECTRONIQUE

(43) Veröffentlichungstag der Anmeldung: 05.08.2015
(73) Patentinhaber: Fujitsu Technology Solutions Intellectual Property GmbH, 80807 München (DE)
(72) Erfinder: HÄUSSERMANN, Rudolf, 86150 Augsburg (DE); BRUDEREK, Timo, 86179 Augsburg (DE)
(74) Vertreter: Epping - Hermann - Fischer
(86) Internationale Anmeldenummer: PCT/EP2012/074904
(87) Internationale Veröffentlichungsnummer: WO 2014/090270

(56) Entgegenhaltungen:
- WO-A1-02/44750
- WO-A1-98/32028

## Beschreibung

Die Erfindung betrifft eine Sensorvorrichtung mit einer Datenverarbeitungsvorrichtung, die dazu eingerichtet ist, ein Sendesignal an eine Sende- und Empfangseinheit zu übertragen. Die Erfindung betrifft weiter ein Betriebsverfahren für eine derartige Sensorvorrichtung.

Sensorvorrichtungen zum Erkennen von Objekten oder Personen sind aus dem Stand der Technik bekannt. Beispielsweise ist aus der DE 10 2007 025991 A1 eine Anordnung zum Überwachung einer Umgebungsbedingung, aufweisend eine Anzeigeeinheit zum Anzeigen von Bildschirminhalten, eine Kamera zum Erfassen von Bildinformationen in einem Benutzerbereich der Anzeigeeinheit und eine Steuervorrichtung bekannt. Dabei ist die Steuervorrichtung dazu eingerichtet, in vorbestimmten zeitlichen Abständen Helligkeitsdaten durch die Kamera zu erfassen, eine Differenzanalyse zwischen den erfassten Helligkeitsdaten durchzuführen und basierend auf der Differenzanalyse wenigstens einen Betriebsparameter der Anzeigeeinheit einzustellen.

Die WO 02/44750 A1 beschreibt ein Pulsradarverfahren sowie ein Pulsradarsensorsystem. Bei dem Pulsradarverfahren werden unterschiedliche Zeitschlitze eines Zeitrahmens vorgegeben. Während eines Zeitschlitzes sendet ein Radarsensor mindestens einen Radarimpuls aus und empfängt die Echosignale. Während der übrigen Zeitschlitze beobachtet der Radarsensor, ob Störsignale auftreten. Anhand der auftretenden Störsignale pro Zeitschlitz wird entschieden, ob der Radarsensor seinen Sende- und Empfangsbetrieb weiter im vorgegebenen Zeitschlitz aufrechterhalten soll oder in einen der übrigen Zeitschlitze des Zeitrahmens wechseln soll. Dieses Verfahren eignet sich für den gleichzeitigen Betrieb mehrerer Radarsensoren, ohne Störungen hervorzurufen.

Die WO 98/32028 A1 beschreibt ein Dauerstrich-Diplex-Dopplerradar, das einen Oszillator und einen Konfliktdetektor aufweist. Der Konfliktdetektor kann so betrieben werden, dass ein Übertragungsregulierungssignal zum Regulieren der Trägerfrequenz oder des Zeitkanals erzeugt wird. Das Radar weist ferner einen Interferenzregler auf, der so betrieben werden kann, dass er als Reaktion auf das Übertragungsregulierungssignal selektiv die Trägerfrequenz bzw. den Zeitkanal reguliert.

Des Weiteren sind aus dem Stand der Technik auch Ultraschallsensoren bekannt. Ultraschallsensoren senden ein Schallsignal aus, das von Objekten reflektiert wird, empfangen ein Echo des Signals und können über die Laufzeit des Echos auf Abstände und Abstandsänderungen rückschließen.

Überwachen mehrere Sensorvorrichtungen den gleichen Bereich, so kann es zu Störungen, zum Beispiel einem sogenannten Crosstalk kommen. Bei einem Crosstalk empfängt eine Sensorvorrichtung das Signal einer anderen Sensorvorrichtung und erkennt dies fälschlicherweise als reflektiertes Signal. Auf diese Weise werden Objekte wahrgenommen, die nicht real existieren.

Ein möglicher Ansatz zur Behebung dieses Problems besteht darin, mehrere Sensorvorrichtungen zur Überwachung eines Bereichs untereinander elektrisch zu verbinden. Mittels einer elektrischen Verbindung können sich diese gegenseitig über die von ihnen ausgesandten oder empfangenen Signale austauschen und hierdurch Fehler bei der Signalanalyse vermeiden. Nachteilig an einem solchen Ansatz ist der damit einhergehende Aufwand zum Herstellen der elektrischen Verbindung und die damit einhergehende mangelnde Flexibilität der Sensoranordnung.

Aufgabe der vorliegenden Erfindung ist es, eine Sensorvorrichtung, ein Betriebsverfahren für eine Sensorvorrichtung sowie deren Verwendung zu beschreiben, die eine Störung durch andere, in demselben Bereich angeordnete Sensorvorrichtungen verhindert oder reduziert. Bevorzugt soll sich die Lösung für den Einsatz mit Ultraschallsensoren eignen.

Gemäß einem ersten Aspekt der Erfindung wird eine Sensorvorrichtung beschrieben, welche wenigstens eine Sende- und Empfangseinheit und eine mit der Sende- und Empfangseinheit verbundene Datenverarbeitungsvorrichtung aufweist. Die Datenverarbeitungsvorrichtung ist dazu eingerichtet, Signalleistungen von mit der Sende- und Empfangseinheit empfangenen Signalen in vorbestimmten Zeitintervallen zu errechnen. Die Datenverarbeitungsvorrichtung ist weiter dazu eingerichtet, ein Sendesignal an die Sende- und Empfangseinheit während eines Zeitintervalls zu übertragen, das mit einem der Zeitintervalle korreliert ist, bei dem eine errechnete Signalleistung unter einem vorbestimmten Grenzwert liegt. Die Datenverarbeitungsvorrichtung der Sensorvorrichtung ist dazu eingerichtet, Zeitintervallfolgen zu bestimmen. Die Zeitintervallfolgen umfassen hierbei eine unmittelbare Folge von Zeitintervallen, deren berechnete Signalleistung unter dem vorbestimmten Grenzwert liegt. Die Datenverarbeitungsvorrichtung ist weiter dazu eingerichtet, dass Sendesignal in dem ersten Zeitintervall der längsten dieser bestimmten Zeitintervallfolgen zu übertragen.

Anspruchsgemäß detektiert die Sensorvorrichtung Signale, beispielsweise Signale, die von anderen Sensorvorrichtungen ausgesandt werden, beziehungsweise Signale, die sonstige Störungen darstellen. Durch Errechnen der Leistungen der Signale in einzelnen Zeitintervallen können unterschiedlichen Zeitintervallen die Werte der Signalleistungen derartiger Störungen zugeordnet werden. Liegen diese Werte über einem vorbestimmten Grenzwert, so ist der Empfang eines reflektierten eigenen Signals innerhalb dieses Zeitintervalls erschwert oder sogar unmöglich. Daher bestimmt die Datenverarbeitungsvorrichtung Zeitintervalle, bei denen die Signalleistungen der empfangenen Signale unterhalb des Grenzwertes liegen.

Bevorzugt gibt der Grenzwert die maximale Störleistung an, bis zu der Signale der Sensorvorrichtung als eigene Signale sicher erkannt werden können. In diesem Fall kann die Sensorvorrichtung in den entsprechenden Zeitintervallen ohne Gefährdung der Eindeutigkeit ein Signal senden und empfangen. Auf dieses Weise kann sich die Sensorvorrichtung an andere Sensorvorrichtungen anpassen, ohne eine elektrische Verbindung zu diesen aufzubauen oder eine andere aktive Abstimmung vornehmen zu müssen.

Gibt es mehrere mögliche Zeitintervallfolgen, so wählt sich die Datenverarbeitungsvorrichtung die längste Zeitintervallfolge. Innerhalb dieser längsten Zeitintervallfolge gibt die Datenverarbeitungsvorrichtung der Sende- und Empfangseinheit vor, ein Sendesignal zu Beginn der Zeitintervallfolge im ersten Zeitintervall zu senden. Ein Vorteil hiervon ist es, dass die Laufzeit eventuell reflektierter Signale weniger begrenzt ist als bei einem Senden in einem kürzeren freien Zeitintervall. Somit kann die maximale Reichweite der Sensorvorrichtung erhöht werden.

Gemäß einer weiteren vorteilhaften Ausgestaltung ist die Datenverarbeitungsvorrichtung zusätzlich dazu eingerichtet, die Errechnung der Signalleistungen empfangener Signale nach einem vorbestimmten Zeitraum zu wiederholen.

Ein Vorteil hiervon ist es, Asynchronitäten in der Taktgebung verschiedener Sensorvorrichtungen zu kompensieren. Der Takt von Taktgeberbausteinen baugleicher Sensorvorrichtungen kann leicht voneinander abweichen. Hierbei kommt es in einer Anordnung mehrerer baugleicher Sensorvorrichtungen über einen längeren Zeitraum zu Asynchronitäten. Dies kann dazu führen, dass ursprünglich freie Zeitintervalle, in denen die Sensorvorrichtung ihre Signale sendet, nach einem längeren Zeitraum nicht mehr frei sind. Wird die Berechnung der freien Zeitintervalle beispielsweise nach einer vorbestimmten Anzahl von Stunden oder Tagen wiederholt, so wird diesem Verhalten entgegengewirkt.

Gemäß einer weiteren vorteilhaften Ausgestaltung ist die Datenverarbeitungsvorrichtung zusätzlich dazu eingerichtet die Errechnung der Signalleistungen empfangener Signale dann zu wiederholen, wenn eine vorbestimmte Anzahl empfangener Signale durch die Datenverarbeitungsvorrichtung als fehlerhafte Signale erkannt wurde. Hierbei werden die empfangenen Signale beispielsweise dadurch als fehlerhaft bestimmt, dass die Signale Echosignale umfassen, die nicht erfolgreich mit dem ausgesendeten Signal korreliert werden können. Alternativ oder zusätzlich kann auch die Überlagerung verschiedener Echo- oder Sendesignale oder der Empfang von Signalen gemäß vorbestimmter Störungsmuster erkannt werden.

Ein Vorteil dieser Ausgestaltung ist es, dass die Sensorvorrichtung auf Veränderungen der räumlichen Umgebung reagieren kann. Wird beispielsweise ein Möbelstück im Sensorbereich verstellt, so führt dies in der Regel zu einer Vielzahl starker Störungen. In diesem Fall verändern sich die Laufzeiten etlicher Sensorsignale. In einem solchen Fall wiederholt die Datenverarbeitungsvorrichtung die Berechung, um neuerlich ein geeignetes Sendeintervall zu bestimmen.

In einer weiteren vorteilhaften Ausgestaltung ist die Sensorvorrichtung dadurch gekennzeichnet, dass die Sensorvorrichtung einen Speicher aufweist, der dazu eingerichtet ist, zu den Zeitintervallen gehörende Signalleistungen zu speichern, die von der Datenverarbeitungsvorrichtung errechnet wurden. Ein Vorteil der Verwendung eines Speichers ist es, dass die errechneten Zeitintervalle, in denen ein Senden und Empfangen störungsfrei möglich ist, gespeichert und später, beispielsweise für eine nachfolgende Analyse, abgerufen werden können.

Gemäß einer weiteren vorteilhaften Ausgestaltung ist die Sensorvorrichtung dadurch gekennzeichnet, dass die Errechnung der Signalleistungen empfangener Signale in einem ersten Zeitraum vor einem Senden von Signalen erfolgt und das Senden von Signalen in einem zweiten Zeitraum erfolgt. Vorteilhaft an der Ausgestaltung der Aufteilung in verschiedene Zeiträume ist es, dass die Errechnung zu einem Zeitpunkt stattfinden kann, bei dem es noch keine Störungen oder reflektierten Signale der eigenen Sensorvorrichtung gibt. Hierdurch ist sichergestellt, dass lediglich Störsignale und Sensorsignale von anderen Sensorvorrichtungen erfasst werden. Wenn in diesem Zeitraum nun ein Zeitfenster entdeckt wird, welches ein Senden ermöglicht, so kann in einem zu diesem Zeitfenster korrelierten Zeitfenster des späteren Zeitraums gesendet werden.

Gemäß einer weiteren vorteilhaften Ausgestaltung ist die Sensorvorrichtung dadurch gekennzeichnet, dass die Sende- und Empfangseinheit ein Piezowandler zum Erzeugen eines Ultraschall-Signals ist. Ein Vorteil der Verwendung eines Piezowandlers zum Erzeugen eines Ultraschall-Signals ist es, dass Ultraschallsignale von beliebigen Objekten reflektiert werden können. So ist es auch möglich, verschiedenfarbige oder transparente Objekte zu detektieren, die beispielsweise von optischen Sensorvorrichtungen nicht erfasst würden.

Gemäß einem zweiten Aspekt der Erfindung wird ein Betriebsverfahren für eine Sensorvorrichtung, beispielsweise die Sensorvorrichtung gemäß dem ersten Aspekt, beschrieben, das die folgenden Schritte umfasst:
- Empfangen von Signalen über einen ersten Zeitraum,
- Errechnen von Signalleistungen von in einer Mehrzahl vorbestimmter Zeitintervalle in dem ersten Zeitraum empfangenen Signalen,
- Auswählen eines Zeitintervalls bei dem die Signalleistung unter einem vorbestimmten Grenzwert liegt,
- Bestimmen eines dem ausgewählten Zeitintervall im ersten Zeitraum zugeordneten Sendeintervalls in einem zweiten Zeitraum und
- Senden während des bestimmten Sendeintervalls.

Im Schritt des Auswählens eines Zeitintervalls werden in einem ersten Teilschritt Zeitintervallfolgen bestimmt, wobei die bestimmten Zeitintervallfolgen eine unmittelbare Folge von Zeitintervallen umfassen, deren berechnete Signalleistungen unter dem vorbestimmten Grenzwert liegen. In einem zweiten Teilschritt wird das erste Zeitintervall der längsten bestimmten Zeitintervallfolge ausgewählt.

Durch dieses Betriebsverfahren ist es möglich, einer Sensorvorrichtung ein Sendeintervall vorzugeben, in dem gesendet und empfangen werden kann, ohne dass Signalstörungen zu erwarten sind.

In einer vorteilhaften Ausgestaltung ist das Betriebsverfahren dadurch gekennzeichnet, dass der Schritt des Errechnens von Signalleistungen ein Integrationsverfahren umfasst und auf einer empfangenen Signalintensität beruht. Ein Vorteil dieser Ausgestaltung ist es, dass die von eine Empfänger empfangenen Signalintensitäten durch ein an sich bekanntes Integrationsverfahren bearbeitet werden können, um auf einfache Weise ein Leistungsspektrum der Signale in den untersuchten Zeitintervallen zu erhalten.

Die beschriebene Sensorvorrichtung gemäß dem ersten Aspekt und/oder das Betriebsverfahren gemäß dem zweiten Aspekt eignen sich beispielsweise zur Verwendung in einem Computersystem. Dabei dient die Sensorvorrichtung beispielsweise zur Bestimmung, ob ein Benutzer sich in einem überwachten Bereich vor dem Computersystem aufhält. In diesem Fall kann die Einnahme eines Energiesparzustands vermieden werden. Umgekehrt kann ein Sicherheitsmechanismus für das Computersystem aktiviert werden, wenn ein Benutzer den überwachten Bereich verlässt.

Die Erfindung wird nachfolgend anhand von Ausführungsbeispielen unter Bezugnahme auf die angehängten Figuren näher erläutert. In den Zeichnungen zeigen:
- Figur 1: ein Blockdiagramm einer Ausgestaltung der Sensorvorrichtung,
- Figur 2: eine Konstellation mehrerer Sensorvorrichtungen und Objekte mit eingezeichneten Signalpfaden der Sensorsignale,
- Figur 3: eine Aufteilung eines Zeitraumes in Zeitintervalle, in denen ein Intensitätssignal, sowie die Zuordnung verschiedener Zeitintervalle zu Sende- und Empfangsintervallen dargestellt ist, und
- Figur 4: ein Ablaufdiagramm für ein Betriebsverfahren der Sensorvorrichtung.

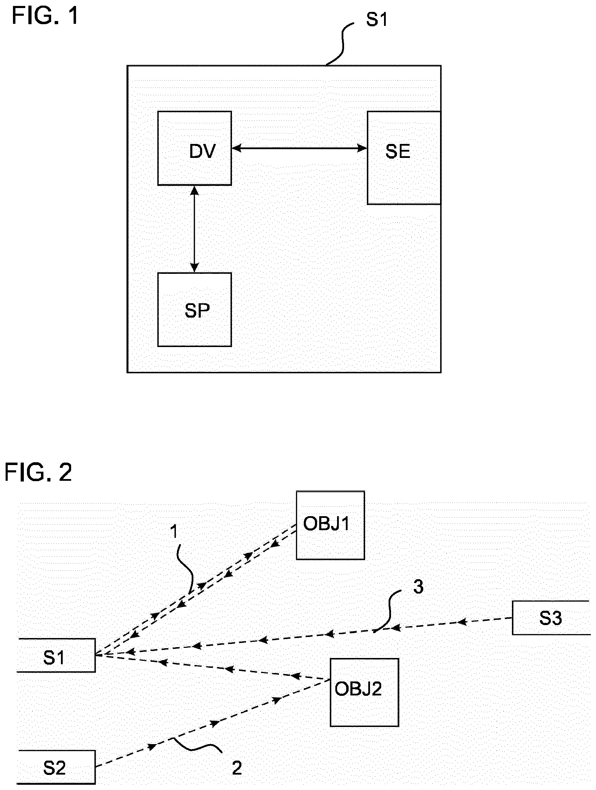

Figur 1 zeigt eine Sensorvorrichtung S1. Die Sensorvorrichtung S1 umfasst eine Sende- und Empfangseinheit SE. Die Sende- und Empfangseinheit SE kann hierbei ein Piezowandler zum Erzeugen und Empfangen von UltraschallSignalen sein. Obwohl die Sende- und Empfangseinheit SE in der Figur 1 als eine zusammenhängende Einheit dargestellt ist, können selbstverständlich auch physisch getrennte Sende- und Empfangsvorrichtungen eingesetzt werden, die zusammengenommen eine logische Sende- und Empfangseinheit SE darstellen.

Die Sensorvorrichtung S1 umfasst weiterhin eine Datenverarbeitungsvorrichtung DV, die mit der Sende- und Empfangseinheit SE verbunden ist. Bei der Datenverarbeitungsvorrichtung DV handelt es sich im Ausführungsbeispiel um einen Mikrocontroller. Des Weiteren ist in der Sensorvorrichtung S1 im Ausführungsbeispiel ein Speicher SP angeordnet, der wiederum mit der Datenverarbeitungsvorrichtung DV verbunden ist.

Die Datenverarbeitungsvorrichtung DV ist dazu eingerichtet, der Sende- und Empfangseinheit SE im normalen Betrieb Sendesignale vorzugeben. Diese Sendesignale können zum Beispiel aus kurzen Impulsen bestehen. Erhält die Sende- und Empfangseinheit SE nun diese vorgegebenen Signale, so werden diese als Ultraschallwellen in den Raum gesendet. Die Ultraschallwellen werden an verschiedenen Objekten reflektiert und zu der Sende- und Empfangseinheit SE zurückreflektiert. Die Sende- und Empfangseinheit SE empfängt nun diese reflektierten Signale und überträgt dazu korrelierte elektrische Signale zurück an die Datenverarbeitungsvorrichtung DV. Basierend auf dem zeitlichen Abstand des Sendesignals und eines zugehörigen reflektierten Signals kann die Datenverarbeitungsvorrichtung DV prinzipiell den Abstand von Objekten zu der Sensorvorrichtung S1 bestimmen. Allerdings kann es dabei, wie nachfolgen dargestellt, zu Fehlern kommen, falls mehrere Sensorvorrichtungen denselben räumlichen Bereich überwachen, wie das Beispielsweise bei einer Benutzerpräsenzüberwachung an in einem Großraumbüro aufgestellten Computern der Fall ist.

In Figur 2 sind drei Sensorvorrichtungen S1 bis S3 dargestellt, sowie zwei Objekte OBJ1 und OBJ2. Die Sensorvorrichtungen S1 bis S3 arbeiten beispielsweise wie oben unter Bezugnahme auf die Sensorvorrichtung S1 gemäß Figur 1 beschrieben. Mit Hilfe gestrichelter Linien sind exemplarisch drei verschiedene Signalverläufe 1 bis 3 dargestellt, die bei der Sensorvorrichtung S1 jeweils zum Empfang eines Signals führen.

Signalpfad 1 zeigt hierbei den erwünschten Signalpfad, eines von der Sensorvorrichtung S1 ausgesandten Signals, das an einem Objekt OBJ1 reflektiert und von der Sensorvorrichtung S1 empfangen und ausgewertet wird.

Signalpfad 2 stellt ebenfalls ein reflektierter Sendesignal dar, das jedoch nicht von der Sensorvorrichtung S1, sondern von der weiteren Sensorvorrichtung S2 ausgesendet wird. Je nachdem, in welchen zeitlichen Abständen das Signal über den Signalpfad 2 von der Sensorvorrichtung S1 empfangen wird, wird für das Objekt OBJ2 eine Distanz berechnet. Da jedoch der Sendezeitpunkt des ausgesendeten Signals der Sensorvorrichtung S2 nicht unbedingt mit dem Sendezeitpunkt des Sendesignals der Sensorvorrichtung S1 übereinstimmt, beziehungsweise die Sensorvorrichtungen S1 und S2 an unterschiedlichen Orten aufgestellt sein können, ist der tatsächliche Abstand des Objekts OBJ2 zu der Sensorvorrichtung S1 in der Regel unterschiedlich von dem errechneten Abstand.

Eine weitere Möglichkeit einer Störung stellt der Signalpfad 3 dar. Dieser wird von einer Sensorvorrichtung S3 direkt zur die Sensorvorrichtung S1 gesendet und erzeugt unter Umständen den Eindruck eines imaginären Objekts, welches nicht real existiert.

Zur Vermeidung von Störungen, wie sie beispielsweise unter Bezugnahme auf die Signalpfade 2 und 3 beschrieben wurden, untersucht die Sensorvorrichtung S1 einen Erkennungszeitraum auf etwaige Störsignale. Im Ausführungsbeispiel erfolgt diese Untersuchung vor dem Aussenden eigener Ultraschallsignale, so dass zum Zeitpunkt der Untersuchung nur fremde Ultraschallsignale durch die Sende- und Empfangseinheit SE erfasst werden.

Da die Schallgeschwindigkeit in Luft und die Sendereichweite der Sende- und Empfangseinheit SE bekannt sind, kann eine maximale Laufzeit der Ultraschallwellen für die Sensorvorrichtung SE 1 berechnet werden. Bei der Überwachung eines Bereichs von 1,5 m beträgt der maximale Signalweg für eine direkte Reflexion beispielsweise 3 m. Multipliziert mit der Schallgeschwindigkeit von etwa 300 m/s ergibt sich eine maximale Signallaufzeit von etwa 10 ms. Dementsprechend kann nun ein Zeitintervall angegeben werden, das groß genug ist, um ein Sendesignal auszusenden und ein reflektiertes Signal zu empfangen.

Soll die Sensorvorrichtung S1 beispielsweise einmal pro 100 ms eine Erkennung von Objekten in ihrem Sensorbereich durchführen, stehen insgesamt 10 Zeitintervalle einer Länge von 10 ms pro Erkennungszeitraum vom 100 ms zur Verfügung. Umgekehrt kann aus einer angegeben Anzahl von parallel zu betreibenden Sensorvorrichtungen auf den maximal zu überwachenden Bereich oder die Erkennungsfrequenz geschlossen werden. In einem Beispiel mit zehn Sensorvorrichtungen beträgt der Auslastungsgrad einer einzelnen Sensorvorrichtung daher maximal 10 Prozent. Somit können bis zu zehn Sensorvorrichtungen ein gemeinsames Übertragungsmedium, hier die Luft zur Übertragung von Echosignalen, gemeinsam nutzen, ohne sich gegenseitig signifikant zu stören.

Ist der Arbeitstakt anderer Ultraschallsignalquellen, wie beispielsweise der Sensorvorrichtungen S2 und S3, nicht im Voraus bekannt, kann dieser über eine Analyse eines hinreichend langen Zeitraums, beispielsweise hundert Millisekunden oder einige Sekunden, bestimmt werden. Auf diese Weise kann die beschriebene Sensorvorrichtung S1 sich an beinahe beliebige, zyklisch arbeitende Störquellen anpassen.

Die Datenverarbeitungsvorrichtung DV berechnet nun für mehrere, bevorzugt alle, Zeitintervalle eines bestimmten Erkennungszeitraum mit Hilfe eines an sich bekannten Integrationsverfahrens eine Signalleistung von empfangenen Signale fremder Signalquellen in den bestimmten Zeitintervallen wenigstens eines Erkennungszeitraums. Die Werte für die bestimmten Signalleistungen inklusive der Zuordnung zu den entsprechenden Zeitintervallen werden im Ausführungsbeispiel im Speicher SP gespeichert.

Handelt es sich bei den empfangenen Signalen im untersuchten Frequenzbereich um Signale von fremden Ultraschallsensoren oder ähnlichen arbeitenden Störquellen, so sind diese vermutlich periodischer Natur. Liegt die Signalleistung eines untersuchten Zeitintervalls eines Erkennungszeitraums unter einem Grenzwert, der so gewählt ist, dass die darin empfangenen Signale keine signifikante Störungen für durch die Sensorvorrichtung S1 selbst ausgesandten Signale bzw. deren Echos darstellen, so eignet sich das entsprechende Zeitintervall eines späteren Erkennungszeitraums daher vermutlich als Sendeintervall. Die Sendeperiode ist dementsprechend an eine Periode von identifizierten Störsignalen angepasst.

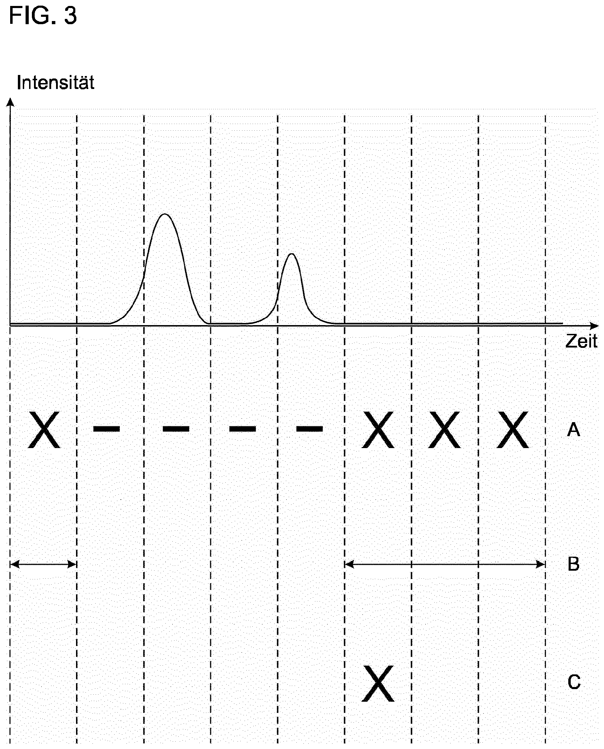

Figur 3 zeigt den Betrieb der Sensorvorrichtung S1 während einer Initialisierungsphase. In Figur 3 ist im oberen Teil eine Funktion der Intensität in einem ersten Erkennungszeitraum empfangener Signale über der Zeit dargestellt. Der Intensitätsverlauf zeigt zwei erfasste Signalgruppen von Störsignalen. Beispielsweise könnte die erste Signalgruppe ein Sendesignal der Sensorvorrichtung S3 gemäß dem Signalpfad 3 der Figur 2 und die zweite Signalgruppe ein durch das vom Objekt OBJ 2 reflektierte Signal der Sensorvorrichtung S2 gemäß dem Signalpfad 2 darstellen.

Die gestrichelten Linien in Figur 3 zeigen eine Aufteilung des Erkennungszeitraums in mehrere Zeitintervalle an. Die Datenverarbeitungsvorrichtung DV ist dazu ausgelegt, zu jedem dieser Zeitintervalle einen Wert der Signalleistung aus der Intensität des empfangenen Signals zu berechnen. Hierzu wird zunächst die Hüllkurve für ein empfangenes, hochfrequenten Ultraschallsignals berechnet. Anschließend wird jeweils die Fläche unterhalb der so bestimmten Intensitätskurve für jedes der Zeitintervalle berechnet.

In Zeile A der Figur 3 ist dargestellt, welche Zeitintervalle von der Datenverarbeitungsvorrichtung DV als Zeitintervalle mit einer hohen Signalleistung markiert wurden. In der Figur 3 ist dies durch ein Minuszeichen dargestellt. In diesen Zeitintervallen ist mit einer erheblichen Beeinträchtigung von reflektierten Signalen eines von der Sensorvorrichtung S1 ausgesandten Sendesignals zu rechnen. Zeitintervalle, bei denen die Signalleistung der empfangenen fremden Störsignale unterhalb des vorgegebenen Grenzwerts liegt, sind durch ein X hervorgehoben. In diesen Zeitintervallen ist mit keiner signifikanten Störung der Sensorvorrichtung S1 zu rechnen.

In Zeile B ist dargestellt, wie die Datenverarbeitungsvorrichtung DV die Länge der zur Verfügung stehenden Zeit zum Senden und Empfangen aufteilt. Auf der linken Seite ist hierbei mit einem kurzen Doppelpfeil die Länge eines ersten Zeitintervalls angezeigt. Auf der rechten Seite ist eine Zeitintervallfolge, bestehend aus drei Zeitintervallen, mit einem langen Doppelpfeil markiert, in denen ein Senden und Empfangen störungsfrei möglich ist. Längere Zeitintervallfolgen stellen verhältnismäßig lange, störungsfreie Zeitscheiben innerhalb eines zyklischen Erkennungszeitraums dar.

In Zeile C ist nun dasjenige Zeitintervall mit einem X markiert, das die Datenverarbeitungsvorrichtung DV auswählt, um der Sende- und Empfangseinheit SE das Senden eines Signals vorzugeben. Gemäß dem Ausführungsbeispiel wählt die Datenverarbeitungsvorrichtung DV das erste Zeitintervall der längsten Zeitintervallfolge aus. In diesem Fall kann die Datenverarbeitungsvorrichtung DV davon ausgehen, dass die folgenden Zeitintervalle ebenfalls frei von Störungen sind, so dass es möglich ist, auch reflektierte Signale mit langen Laufzeiten störungsfrei empfangen zu können.

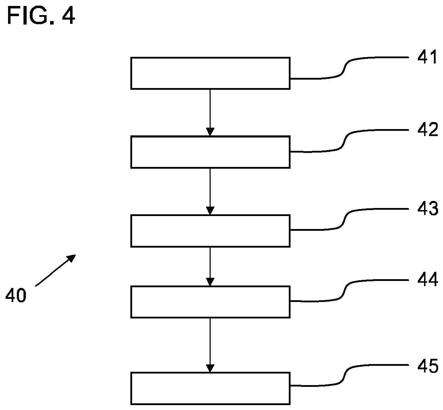

Figur 4 zeigt ein Ablaufdiagramm 40 eines Betriebsverfahrens für eine Sensorvorrichtung S1 gemäß einer Ausgestaltung der Erfindung.

In einem ersten Schritt 41 werden hierbei Signale lediglich empfangen. Dadurch, dass die Signale lediglich empfangen werden und keine eigenen Signale ausgesendet werden, ist sichergestellt, dass lediglich solche Signale empfangen werden, die von fremden Quellen stammen.

Im Schritt 42 werden nun Signalleistungen der in Schritt 41 empfangenen, zu bestimmten Zeitintervallen gehörende Signalteile mithilfe eines an sich bekannten Integrationsverfahrens berechnet. Ebenso ist es möglich, dass zuerst die Signalleistung berechnet wird und der Leistungsverlauf anschließend den Zeitintervallen zugeordnet wird bzw. die Zeitintervalle anhand erkannter Signalteile oder -gruppen ausgerichtet werden.

Im Schritt 43 werden die Werte der in Schritt 42 berechneten Signalleistungen aus den jeweiligen Zeitintervallen mit einem vorbestimmten Grenzwert verglichen. Nun werden diejenigen Zeitintervalle ausgewählt, bei denen die Signalleistungen unterhalb dieses Grenzwerts liegen. Diese Zeitintervalle sind weitgehend frei von Störungen und können zum Senden und Empfangen durch die Sensorvorrichtung S1 verwendet werden.

In Schritt 44 wird nun ein Zeitintervall ausgewählt, das zum Senden geeignet ist und als Sendeintervall bestimmt. Das Sendeintervall ist hierbei bevorzugt das erste Zeitintervall einer zusammenhängenden Folge von Zeitintervallen, deren Intensität unter dem vorbestimmten Grenzwert liegt. Mit Abschluss des Schritts 44 ist die Initialisierungsphase abgeschlossen.

In Schritt 45 werden nun Sendesignale durch die Sensorvorrichtung S1 ausgesendet, und entsprechende reflektierte Signale durch die Sensorvorrichtung S1 ausgewertet, um ein Vorhandensein und ggf. einen Abstand oder eine Bewegung von Objekten in einem Überwachungsbereich zu bestimmen, wie dies beispielsweise unter Bezugnahme auf Figur 1 für einen Normalbetrieb beschrieben wurde.

Der Schritt 45 wird in der Regel wiederholt, beispielsweise einmal für jeden Erkennungszeitraum, durchgeführt.

Kommt es bei der Analyse von empfangenen Signalen im Schritt 45 wider Erwarten dennoch zu Fehlern, kann die Initialisierung der Sensorvorrichtung S1 umfassend die Schritte 41 bis 44 erneut durchgeführt werden. Alternativ oder zusätzlich kann die Initialisierung auch automatisch nach einer vorbestimmten Zeitdauer wiederholt werden.

### Bezugszeichenliste

- S1, S2, S3: Sensorvorrichtung
- SE: Sende- und Empfangseinheit
- DV: Datenverarbeitungsvorrichtung
- SP: Speicher
- 1, 2, 3: Signalpfad
- OBJ1, OBJ2: Objekt
- 40: Ablaufdiagramm
- 41 bis 45: Verfahrensschritt

## Patentansprüche

1. Sensorvorrichtung (S1) aufweisend wenigstens eine Sende- und Empfangseinheit (SE) und eine mit der Sende- und Empfangseinheit (SE) verbundene Datenverarbeitungsvorrichtung (DV), die dazu eingerichtet ist, Signalleistungen von mit der Sende- und Empfangseinheit (SE) empfangenen Signalen in vorbestimmten Zeitintervallen zu errechnen, wobei die Datenverarbeitungsvorrichtung (DV) weiter dazu eingerichtet ist, ein Sendesignal an die Sende- und Empfangseinheit (SE) während eines Zeitintervalls zu übertragen, das mit einem der Zeitintervalle korreliert ist, bei dem eine errechnete Signalleistung unter einem vorbestimmten Grenzwert liegt,
**dadurch gekennzeichnet, dass** die Datenverarbeitungsvorrichtung (DV) dazu eingerichtet ist, Zeitintervallfolgen umfassend eine unmittelbare Folge von Zeitintervallen, deren berechnete Signalleistung unter dem vorbestimmten Grenzwert liegt, zu bestimmen und das Sendesignal in dem ersten Zeitintervall der längsten bestimmten Zeitintervallfolge zu übertragen.

2. Sensorvorrichtung (S1) nach Anspruch 1, **dadurch gekennzeichnet, dass** die Datenverarbeitungsvorrichtung (DV) zusätzlich dazu eingerichtet ist, die Errechnung der Signalleistungen empfangener Signale nach einem vorbestimmten Zeitraum zu wiederholen.

3. Sensorvorrichtung (S1) nach einem der Ansprüche 1 oder 2, **dadurch gekennzeichnet, dass** die Datenverarbeitungsvorrichtung (DV) zusätzlich dazu eingerichtet ist, die Errechnung der Signalleistungen empfangener Signale dann zu wiederholen, wenn eine vorbestimmte Anzahl empfangener Signale durch die Datenverarbeitungsvorrichtung (DV) als fehlerhafte Signale erkannt wurden.

4. Sensorvorrichtung (S1) nach einem der Ansprüche 1 bis 3, **dadurch gekennzeichnet, dass** die Sensorvorrichtung (S1) einen Speicher (SP) aufweist, der dazu eingerichtet ist, zu den Zeitintervallen gehörende Signalleistungen zu speichern, die von der Datenverarbeitungsvorrichtung (DV) errechnet wurden.

5. Sensorvorrichtung (S1) nach einem der Ansprüche 1 bis 4, **dadurch gekennzeichnet, dass** die Errechnung der Signalleistungen empfangener Signale in einem ersten Zeitraum vor einem Senden von Signalen erfolgt und das Senden von Signalen in einem zweiten Zeitraum erfolgt.

6. Sensorvorrichtung (S1) nach einem der Ansprüche 1 bis 5, **dadurch gekennzeichnet, dass** die Sende- und Empfangseinheit (SE) einen Piezowandler zum Umwandeln elektrischer Signale in ein akustisches UltraschallSignal umfasst.

7. Betriebsverfahren für eine Sensorvorrichtung (S1), insbesondere die Sensorvorrichtung (1) nach einem der Ansprüche 1 bis 6, umfassend die Schritte:
Empfangen von Signalen über einen ersten Zeitraum (41), Errechnen von Signalleistungen von in einer Mehrzahl vorbestimmter Zeitintervalle des ersten Zeitraums empfangenen Signalen (42),
Auswählen wenigstens eines Zeitintervalls, bei dem die Signalleistung unter einem vorbestimmten Grenzwert liegt (43),
Bestimmen eines dem ausgewählten Zeitintervall im ersten Zeitraum zugeordneten Sendeintervalls in einem zweiten Zeitraum (44) und
Senden eines Sendesignals während des bestimmten Sendeintervalls (45),
**dadurch gekennzeichnet, dass**
im Schritt des Auswählens eines Zeitintervalls in einem ersten Teilschritt Zeitintervallfolgen bestimmt werden, wobei die bestimmten Zeitintervallfolgen eine unmittelbare Folge von Zeitintervallen umfassen, deren berechnete Signalleistungen unter dem vorbestimmten Grenzwert liegen, und in einem zweiten Teilschritt das erste Zeitintervall der längsten bestimmten Zeitintervallfolge ausgewählt wird.

8. Betriebsverfahren nach Anspruch 7, **dadurch gekennzeichnet, dass** die Schritte des Empfangens, Errechnens, Auswählen und Bestimmens nach Ablaufen eines vorbestimmten dritten Zeitraums wiederholt werden.

9. Betriebsverfahren nach einem der Ansprüche 7 oder 8, **dadurch gekennzeichnet, dass** die Schritte des Empfangens, Errechnens, Auswählens und Bestimmens wiederholt werden, wenn eine vorbestimmte Anzahl empfangener Signale im zweiten Zeitraum als fehlerhaft erkannt wurden.

10. Betriebsverfahren nach einem der Ansprüche 7 bis 9, **dadurch gekennzeichnet, dass** im Schritt des Errechnens von Signalleistungen ein Integrationsverfahren verwendet wird, das auf einer empfangenen Signalintensität beruht.

11. Verwendung einer Sensorvorrichtung gemäß einem der Ansprüche 1 bis 6 und/oder eines Betriebsverfahrens gemäß einem der Ansprüche 7 bis 10 in einem Computersystem zur Bestimmung, ob ein Benutzer sich in einem überwachten Bereich vor dem Computersystem aufhält, wobei das Computersystem dazu eingerichtet ist, in Abhängigkeit der Erkennung eine vorbestimmte Aktion auszuführen.

## Claims

1. Sensor device (S1) comprising at least one transceiver unit (SE) and a data processing device (DV) connected to the transceiver unit (SE), which is configured to calculate, at predetermined time intervals, the signal power of signals received with the transceiver unit (SE), wherein the data processing device (DV) is further configured to transmit a transmission signal to the transceiver unit (SE) during a time interval which correlates with one of the time intervals, in which a calculated signal power is below a predetermined threshold value,
**characterized in that**
the data processing device (DV) is configured to determine time interval sequences, including a direct sequence of time intervals, the calculated signal power of which is below the predetermined threshold value, and to transmit the transmission signal in the first time interval of the longest determined time interval sequence.

2. Sensor device (S1) according to claim 1, **characterized in that** the data processing device (DV) is further configured to repeat the calculation of the signal power of received signals after a predetermined time period.

3. Sensor device (S1) according to one of claims 1 or 2,
**characterized in that** the data processing device (DV) is additionally configured to repeat the calculation of the signal power of received signals when a predetermined number of received signals are identified as faulty signals by the data processing device (DV).

4. Sensor device (S1) according to one of claims 1 to 3, **characterized in that** the sensor device (S1) comprises a memory (SP), which is configured to store signal power associated with the time intervals that were calculated by the data processing device (DV).

5. Sensor device (S1) according to one of claims 1 to 4, **characterized in that** the calculation of the signal power of received signals is effected in a first period of time prior to a transmission of signals, and the transmission of signals is effected in a second period of time.

6. Sensor device (S1) according to one of claims 1 to 5, **characterized in that** the transceiver unit (SE) comprises a piezo transducer for converting electrical signals to an acoustic ultrasonic signal.

7. Operating method for a sensor device (S1), in particular the sensor device (1) according to one of claims 1 to 6, comprising the steps:
Receiving of signals over a first time period (41),
Calculating the signal power of signals received in a plurality of predetermined time intervals of the first time period (42),
Selecting at least one time interval, in which the signal power is below a predetermined threshold (43), Determining, in a second time period, a transmission interval assigned to the selected time interval in the first time period (44), and
Transmitting a transmission signal during the determined transmission interval (45),
**characterized in that**
in the step of selecting a time interval, time interval sequences are determined in a first sub-step, wherein the determined time interval sequences comprise a direct sequence of time intervals, the calculated signal powers of which are below the predetermined threshold, and, in a second sub-step, the first time interval of the longest determined time interval sequence is selected.

8. Operating method according to claim 7, **characterized in that** the steps of receiving, calculating, selecting and determining are repeated after elapse of a predetermined third time period.

9. Operating method according to one of claims 7 or 8,
**characterized in that** the steps of receiving, calculating, selecting, and determining are repeated if a predetermined number of received signals in the second period were identified as faulty.

10. Operating method according to one of claims 7 to 9,
**characterized in that** an integration method is used in the step of calculating signal powers, which is based upon a received signal intensity.

11. Use of a sensor device according to one of claims 1 to 6 and/or an operating method according to one of claims 7 to 10 in a computer system for determining whether a user is staying within a monitored area in front of the computer system, wherein the computer system is configured to perform a predetermined action depending of the recognition.

## Revendications

1. Dispositif de capteur (S1) présentant au moins une unité d'émission et de réception (SE) et un dispositif de traitement de données (DV) relié à l'unité d'émission et de réception (SE), lequel est configuré pour calculer, dans des intervalles de temps prédéterminés, des puissances de signal de signaux reçus à l'aide de l'unité d'émission et de réception (SE), le dispositif de traitement de données (DV) étant en outre configuré pour transmettre un signal d'émission à l'unité d'émission et de réception (SE) pendant un intervalle de temps, lequel est corrélé avec l'un des intervalles de temps, dans lequel une puissance de signal calculée est située en dessous d'une valeur limite prédéterminée,
**caractérisé en ce que**
le dispositif de traitement de données (DV) est configuré pour déterminer des séquences d'intervalles de temps comprenant une séquence directe d'intervalles de temps, dont la puissance de signal calculée est située en dessous de la valeur limite prédéterminée, et pour transmettre le signal d'émission dans le premier intervalle de temps de la séquence d'intervalles de temps déterminée la plus longue.

2. Dispositif de capteur (S1) selon la revendication 1,
**caractérisé en ce que** le dispositif de traitement de données (DV) est en outre configuré pour répéter, après une période prédéterminée, le calcul des puissances de signal de signaux reçus.

3. Dispositif de capteur (S1) selon l'une quelconque des revendications 1 ou 2, **caractérisé en ce que** le dispositif de traitement de données (DV) est en outre configuré pour répéter le calcul des puissances de signal de signaux reçus lorsqu'un nombre prédéterminé de signaux reçus ont été identifiés par le dispositif de traitement de données (DV) comme signaux défectueux.

4. Dispositif de capteur (S1) selon l'une quelconque des revendications 1 à 3, **caractérisé en ce que** le dispositif de capteur (S1) présente une mémoire (SP) qui est configurée pour mémoriser les puissances de signal appartement aux intervalles de temps, lesquelles ont été calculées par le dispositif de traitement de données (DV).

5. Dispositif de capteur (S1) selon l'une quelconque des revendications 1 à 4, **caractérisé en ce que** le calcul des puissances de signal de signaux reçus est réalisé pendant une première période avant une émission de signaux et **en ce que** l'émission de signaux est réalisée pendant une deuxième période.

6. Dispositif de capteur (S1) selon l'une quelconque des revendications 1 à 5, **caractérisé en ce que** l'unité d'émission et de réception (SE) comprend un convertisseur piézoélectrique destiné à convertir des signaux électriques en un signal ultrasonore acoustique.

7. Procédé de fonctionnement pour un dispositif de capteur (S1), notamment le dispositif de capteur (1) selon l'une quelconque des revendications 1 à 6, comprenant les étapes :
réception de signaux pendant une première période (41), calcul de puissances de signal de signaux reçus pendant une pluralité d'intervalles de temps prédéterminés de la première période (42),
sélection d'au moins un intervalle de temps dans lequel la puissance de signal est située en dessous d'une valeur limite prédéterminée (43),
détermination, pendant une deuxième période, d'un intervalle d'émission attribué à l'intervalle de temps sélectionné pendant la première période (44) et émission d'un signal d'émission pendant l'intervalle de temps déterminé (45),
**caractérisé en ce qu'**
à l'étape de la sélection d'un intervalle de temps, des séquences d'intervalles de temps sont déterminées dans une première étape partielle, les séquences d'intervalles de temps déterminées comprenant une séquence directe d'intervalles de temps dont les puissances de signal calculées sont situées en dessous de la valeur limite prédéterminée, et **en ce que** dans une seconde étape partielle, le premier intervalle de temps de la séquence d'intervalles de temps déterminée la plus longue est sélectionné.

8. Procédé de fonctionnement selon la revendication 7,
**caractérisé en ce que** les étapes de la réception, du calcul, de la sélection et de la détermination sont répétées après l'écoulement d'une troisième période prédéterminée.

9. Procédé de fonctionnement selon l'une quelconque des revendications 7 ou 8, **caractérisé en ce que** les étapes de la réception, du calcul, de la sélection et de la détermination sont répétées lorsqu'un nombre prédéterminé de signaux reçus ont été identifiés comme défectueux pendant la deuxième période.

10. Procédé de fonctionnement selon l'une quelconque des revendications 7 à 9, **caractérisé en ce qu'**à l'étape du calcul de puissances de signal, un procédé d'intégration est utilisé, lequel repose sur une intensité de signal reçue.

11. Utilisation dans un système informatique d'un dispositif de capteur selon l'une quelconque des revendications 1 à 6 et/ou selon un procédé de fonctionnement selon l'une quelconque des revendications 7 à 10, dans le but de déterminer si un utilisateur séjourne dans une zone surveillée située devant le système informatique, le système informatique étant configuré pour exécuter une action prédéterminée en fonction de l'identification.
